Europäisches Patentamt

European Patent Office

Office européen des brevets

(19)

(11) Numéro de publication: **0 017 993**
**B1**

(12) **FASCICULE DE BREVET EUROPEEN**

(45) Date de publication du fascicule du brevet:
10.08.83

(21) Numéro de dépôt: **80102077.7**

(22) Date de dépôt: **18.04.80**

(51) Int. Cl.³: **F 16 H 47/08,** F 16 H 3/52,
F 16 H 45/02

(54) Changement de vitesse à train épicycloidal et convertisseur de couple, avec quatre rapports de marche avant et pontage du convertisseur.

(30) Priorité: **20.04.79 FR 7910059**

(43) Date de publication de la demande:
**29.10.80 Bulletin 80/22**

(45) Mention de la délivrance du brevet:
**10.08.83 Bulletin 83/32**

(84) Etats contractants désignés:
**DE GB IT NL SE**

(56) Documents cités:
**FR-A-1 055 876**
**FR-A-2 188 741**
**US-A-3 494 223**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Mercier, Jacques, 5 rue Alasseur,**
**F-75015 Paris (FR)**
Inventeur: **Rameau, Jean, 3 rue de la Pointe Robert,**
**F-95110 Sannois (FR)**

(74) Mandataire: **Casalonga, Alain et al, BUREAU D.A.**
**CASALONGA OFFICE JOSSE & PETIT**
**Baaderstrasse 12-14, D-8000 München 5 (DE)**

EP 0 017 993 B1

Changement de vitesses à train épicycloïdal et convertisseur de couple, avec quatre rapports de marche avant et pontage du convertisseur

La présente invention a pour objet un perfectionnement aux changements de vitesses à trains d'engrenages épicycloïdaux associés avec un convertisseur de couple.

Suivant un type connu de changement de vitesses épicycloïdal, ses arbres menant et mené sont disposés suivant le même axe et il comporte deux planétaires centraux, une couronne dentée intérieurement et un porte satellites, ce dernier portant deux jeux de satellites où chaque satellite du premier jeu engrène avec le satellite correspondant du deuxième jeu, le premier jeu engrenant avec le premier planétaire et le deuxième jeu engrenant simultanément avec le deuxième planétaire et la couronne dentée intérieurement. L'ensemble se complète par deux dispositifs d'embrayage, deux dispositifs d'immobilisation et une roue libre qui permettent de contrôler le fonctionnement des trains d'engrenages épicycloïdaux et d'obtenir trois rapports de marche avant et une marche arrière sur l'arbre mené de la transmission.

Il est connu, d'après le brevet US-A-3 494 223, de réaliser un changement de vitesses épicycloïdal qui permet d'obtenir un quatrième rapport de marche avant en utilisant les organes du changement de vitesses précédent à trois rapports de marche avant et en ajoutant seulement un troisième embrayage susceptible de transmettre au porte-satellites une partie de la puissance du moteur sans transiter par le train épicycloïdal ni par le convertisseur.

Lorsque l'organe de liaison entre l'organe moteur et le train épicycloïdal est un convertisseur de couple, le glissement inhérent à ce type d'organe est responsable d'une perte d'énergie qu'il y a intérêt à éviter.

Conformément à l'invention, le troisième embrayage permet de lier en rotation le porte-satellites, non pas avec l'arbre d'entrée du convertisseur (ou arbre moteur) mais avec l'arbre de sortie du convertisseur qui est l'arbre menant du train épycycloïdal.

De la sorte, la partie de la puissance du moteur transmise par cet embrayage au porte-satellites transite par le convertisseur de couple, donc avec plus de souplesse et des vitesses différentes.

Suivant une autre caractéristique de l'invention, le dispositif de commande du troisième embrayage assure, par un déplacement axial suivant l'axe principal du mécanisme, la commande d'un dispositif d'embrayage intégré au convertisseur de couple, lequel dispositif d'embrayage permet de neutraliser le glissement relatif entre la turbine et le carter du convertisseur, et de lier rigidement en rotation lesdits organes.

Ladite invention s'applique particulièrement aux trains planétaires du type décrit ci-dessus, dans lesquels l'arbre de sortie est lié à la couronne, ledit arbre de sortie, concentrique à l'arbre d'entrée, comportant un pignon d'attaque qui forme le premier élément d'un train réducteur assurant la transmission du mouvement à l'organe utilisateur, par exemple un essieu moteur.

Ladite invention s'applique également aux trains planétaires du type décrit ci-dessus dans lesquels l'arbre d'entrée est entraîné par la turbine d'un convertisseur de couple, organe suffisamment connu pour qu'il soit inutile de le décrire.

Les autres caractéristiques et avantages de l'invention seront mieux compris à la lecture de la description qui suit d'exemples particuliers de réalisation, représentée sur le dessin annexé, sur lequel:

la fig. 1 représente une vue schématique d'un mécanisme de changement de vitesses à quatre rapports de marche avant et un de marche arrière avec convertisseur de couple suivant l'invention;

la fig. 2 représente une vue en coupe longitudinale d'une autre forme de réalisation plus compacte que celle de la fig. 1;

les figs. 3, 4 et 5 sont des tableaux explicatifs de réalisation des différents rapports, respectivement dans le dispositif connu et dans deux variantes de réalisation de l'invention.

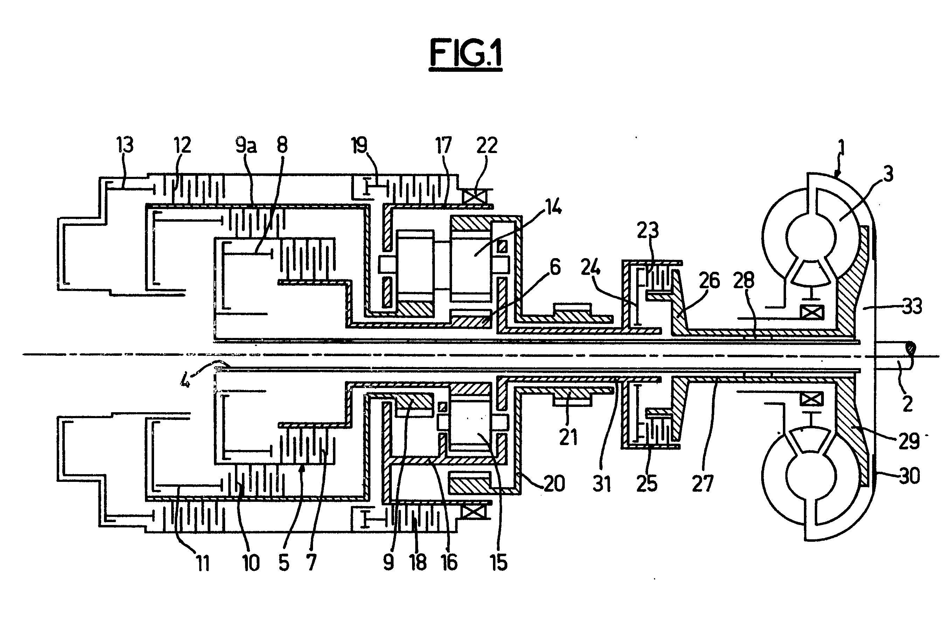

Sur la fig. 1, l'organe de liaison entre l'arbre moteur 2 et le mécanisme à train planétaire est un convertisseur hydrocinétique de couple 1 dont l'organe de sortie ou turbine du convertisseur 3 est solidaire en rotation de l'arbre d'entrée 4 du mécanisme de changement de vitesses. L'arbre 4 est solidaire d'une cloche 5 qui permet, par l'action de l'embrayage 7 commandé par le piston 8, d'assurer l'entraînement en rotation du planétaire 6. La même cloche 5 permet, par l'action de l'embrayage 10, commandé par un piston 11, d'assurer l'entraînement en rotation d'une cloche 9a et d'un planétaire 9 qui lui est lié.

La cloche 9a, coagissant avec un organe d'immobilisation 12 commandé par un piston 13, permet d'assurer l'immobilisation du planétaire 9. Des satellites doubles 14, et des satellites simples 15 tourillonnent dans un porte-satellites 16 qui peut être immobilisé au moyen d'un organe d'immobilisation 18 agissant sur un anneau 17 et commandé par un piston 19. Le porte-satellites 16 peut prendre appui, pour un seul sens de rotation, sur le carter par l'intermédiaire d'une roue libre 22 agissant sur l'anneau 17. L'organe de sortie d'un tel train planétaire est une couronne dentée 20 solidaire d'un pignon 21.

La partie du mécanisme décrite ci-dessus correspond à une réalisation connue d'un mécanisme de changement de vitesses à trois rapports de marche avant et une marche arrière.

Comme dans le brevet américain sus-visé, il est prévu un dispositif pour dériver vers l'arbre porte-satellites une partie de la puissance du moteur, de manière à obtenir un quatrième rapport avec le seul train planétaire existant.

Cependant, selon une première caractéristique de l'invention, ce dispositif relie le porte-satellites à l'arbre «menant» 4, ou arbre d'entrée du train épicycloïdal, et non pas à l'arbre «moteur» 2 ou arbre d'entrée du convertisseur 1. De cette manière, la dérivation de puissance transite par le convertisseur contrairement à l'état de la technique.

Dans ce but, le porte-satellites 16 est prolongé par un arbre tubulaire 31 solidaire d'une cloche 25. Un embrayage 23 commandé par un piston 24 permet de lier en rotation le porte-satellites 16 et un flasque 26 solidaire d'un arbre tubulaire 27 solidaire en rotation de l'arbre d'entrée 4 par l'intermédiaire des cannelures 28.

Selon une autre caractéristique de l'invention, l'action du piston 24 permet, en repoussant les éléments de l'embrayage 23 qui prennent appui sur le flasque 26, de déplacer axialement l'arbre tubulaire 27. Ledit arbre 27 pousse le flasque 29 de la turbine 3 dont la surface annulaire vient au contact d'une garniture 30 recouvrant la surface intérieure du carter de convertisseur 1. On obtient ainsi la liaison en rotation du porte-satellites 16 et de l'arbre d'entrée 4 et la suppression progressive du glissement relatif entre la turbine 3 et le carter du convertisseur 1 jusqu'au «pontage» complet du convertisseur.

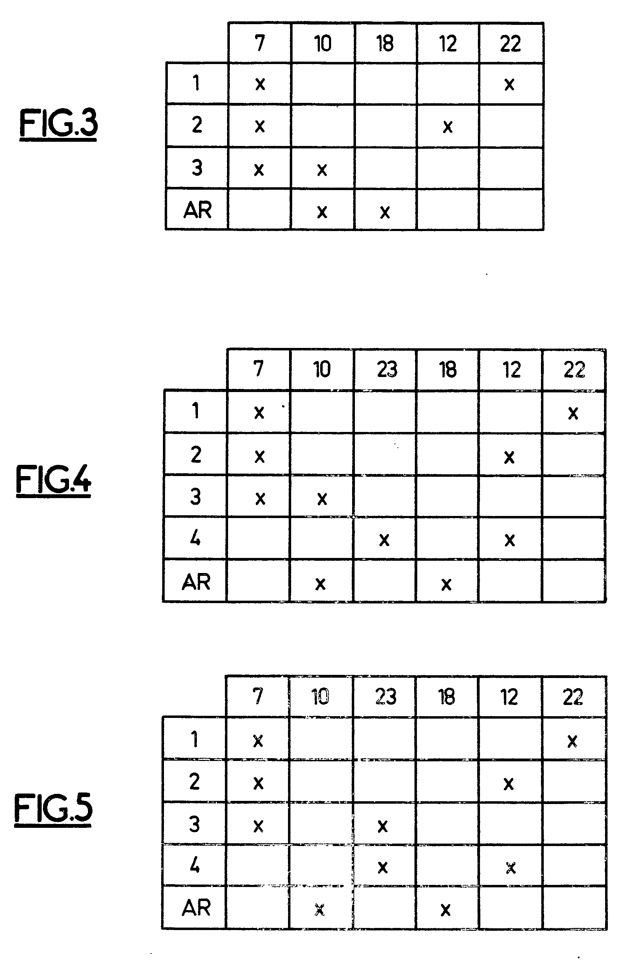

Le «pontage» du convertisseur lié au fonctionnement de l'embrayage 23 peut être obtenu sur les 3° ou 4° rapport ou sur le 4° rapport seul. Le fonctionnement du mécanisme du changement de vitesses ressort des tableaux des figs. 3 à 5, sur lesquels on a figuré par des X les organes récepteurs actionnés. La colonne de gauche indique les rapports de vitesses.

Le tableau de la fig. 3 se rapporte à l'utilisation du train planétaire décrit ci-dessus utilisé dans une boîte à trois rapports en marche avant (dispositif connu).

Les tableaux des figs. 4 et 5 se rapportent à l'utilisation du même train planétaire dans une boîte à quatre rapports en marche avant selon l'invention.

La fig. 4 correspond au pontage du convertisseur sur la seule 4e vitesse.

La fig. 5 correspond au pontage du convertisseur sur les rapports 3 et 4.

Le premier rapport de transmission est obtenu en actionnant l'embrayage 7, la transmission du couple moteur à partir de l'arbre de turbine 4 s'effectuant par la cloche 5 et l'embrayage 7 vers le planétaire 6, puis par les satellites 15 et 14, ces derniers engrenant avec la couronne 20 solidaire du pignon de sortie 21. Les axes des satellites 15 et 14 prennent appui sur le porte-satellites 16, lequel est immobilisé par rapport au carter par la roue libre 22.

Le deuxième rapport de transmission est obtenu en maintenant actionné l'embrayage 7 et en actionnant le dispositif d'immobilisation 12. La transmission est réalisée depuis l'arbre de turbine 4 par la cloche 5, l'embrayage 7, le planétaire 6, les satellites 15 et 14. Les satellites doubles 14 prennent appui sur le planétaire 9 immobile, ce qui entraîne la rotation du porte-satellites 16 en sens inverse de l'arbre de turbine, sens autorisé par la roue libre 22. Les satellites doubles 14 entraînent par réaction la couronne 20 dans le même sens que l'arbre d'entrée.

Le troisième rapport est obtenu en maintenant actionné l'embrayage 7 et en actionnant l'embrayage 10. Il en résulte que tous les éléments du train planétaire deviennent solidaires et tournent en bloc avec l'arbre d'entrée à la même vitesse.

Dans le cas de l'invention, il est possible également d'obtenir le troisième rapport en actionnant l'embrayage 23 au lieu du 10, ce qui explique la différence entre les figs. 4 et 5.

Le quatrième rapport est obtenu en actionnant l'embrayage 23 et le dispositif d'immobilisation 12. La transmission est réalisée depuis l'arbre de turbine 4 par l'embrayage 23 lié au porte-satellites 16. Les satellites doubles 14 entraînés par leurs axes prennent appui sur le planétaire 9 immobilisé par 12, ce qui entraîne la rotation dans le même sens que l'arbre d'entrée de la couronne 20 solidaire du pignon 21.

Le rapport de marche arrière est obtenu en actionnant l'embrayage 10 et le dispositif d'immobilisation 18. La transmission est réalisée depuis l'arbre de turbine 4 par l'embrayage 10 vers le planétaire 9 et les satellites 14. Le porte-satellites 16 étant immobilisé par le dispositif 18, les satellites doubles 14 prennent appui sur leurs axes pour entraîner la couronne 20 dans le sens inverse de l'arbre d'entrée.

Le fonctionnement simultané de l'embrayage 23 et du dispositif de «pontage» de la turbine 3 avec le carter de convertisseur 1, par l'intermédiaire du flasque 29 venant en contact avec la garniture 30, est obtenu par une caractéristique particulière dudit embrayage 23.

Pour cela, et contrairement à la disposition classique dans laquelle des disques de friction, solidaires en rotation alternativement de la cloche et du moyeu, sont pressés par le piston contre un anneau d'appui solidaire de la cloche, dans la disposition selon l'invention, l'anneau d'appui est solidaire du moyeu, l'ensemble formant le flasque 26. Ce flasque 26 transmet la poussée reçue par le piston 24 au dispositif de «pontage» du convertisseur déjà décrit ci-dessus.

Le fonctionnement du dispositif de pontage peut être assisté par des pressions différentes que des organes de distribution hydraulique permettent d'obtenir, de façon connue, entre la capacité intérieure du carter de convertisseur et la capacité 33 entre carter et flasque de turbine 29. Le désengagement du pontage est, en particulier, obtenu en accroissant la pression d'alimentation dans la capacité 33.

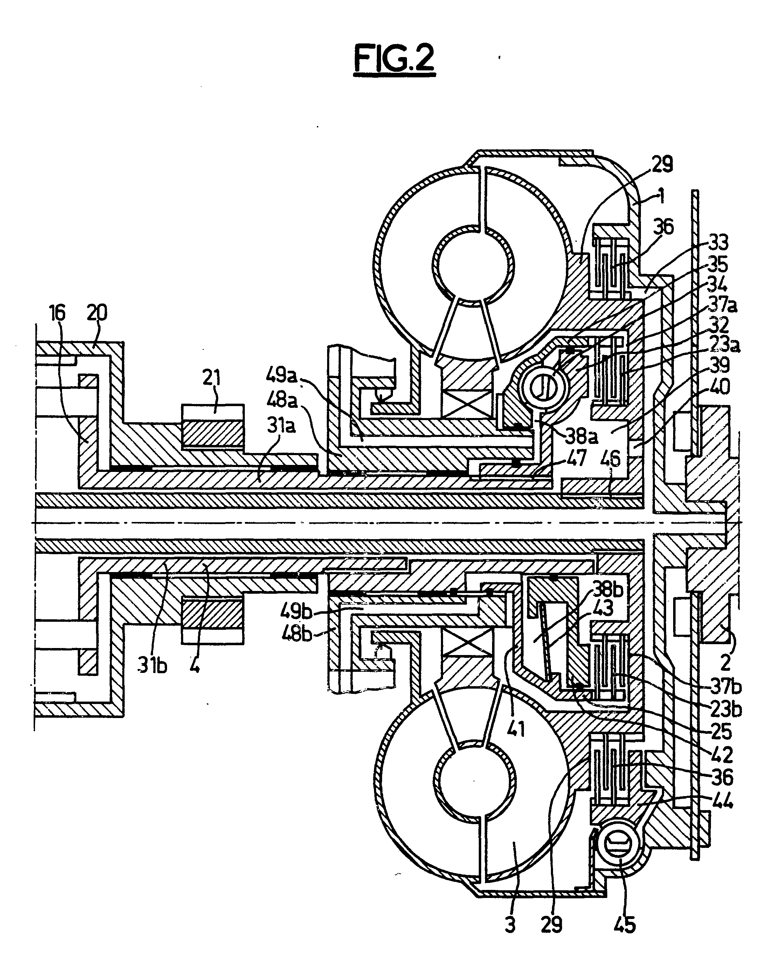

Sur la fig. 2, l'organe de liaison entre l'arbre moteur 2 et le mécanisme de train planétaire est encore un convertisseur hydrocinétique de couple 1 dont l'organe de sortie ou turbine du convertisseur 3 est solidaire, en rotation, de l'arbre d'entrée 4 du mécanisme de changement de vitesses. La description et le fonctionnement des organes de liaison entre les différents éléments du mécanisme à train planétaire sont les mêmes que pour la réalisation de la fig. 1. L'organe de sortie du train planétaire reste la couronne 20 solidaire du pignon 21.

La description qui suit ne concerne que les éléments supplémentaires figurant sur la fig. 2, les éléments communs avec la fig. 1, portant les mêmes numéros de référence. Selon cette seconde réalisation de l'invention, la possibilité de lier en rotation l'arbre porte-satellites à l'arbre d'entrée permet d'obtenir un quatrième rapport avec le seul train planétaire existant, et simultanément de passer de la liaison par convertisseur hydrocinétique à une liaison directe avec l'arbre moteur.

Sur la fig. 2, la demi-partie supérieure de la figure (références portant l'indice a) correspond à une réalisation comportant, selon l'invention, un dispositif amortisseur de torsion interposé, dans la chaîne cinématique, entre l'embrayage 23a et l'arbre tubulaire 31a. Dans cette réalisation, le porte-satellites 16 est prolongé par un arbre tubulaire 31a, lié en rotation au moyeu-piston 32 par les cannelures 47. Ledit moyeu-piston 32 coulisse à l'intérieur de la cloche d'embrayage 35, à laquelle il est lié élastiquement en rotation par des ressorts 34 réalisant, de façon connue, un amortisseur de torsion.

La capacité de travail 38a reçoit, par un conduit 49a ménagé dans le tourillon de convertisseur 48a, le fluide sous pression destiné à la commande de l'embrayage 23a, dont les éléments de friction prennent appui sur le plateau 37a solidaire du plateau annulaire 29 de la turbine 3 du convertisseur. Ledit plateau annulaire 29 est l'élément d'appui mobile axialement de l'embrayage 36 dont les éléments de friction prennent appui sur la partie annulaire du carter de convertisseur 1.

Comme dans le dispositif représenté schématiquement sur la fig. 1, l'ensemble décrit ci-dessus permet d'obtenir la liaison en rotation du porte-satellites 16 et de l'arbre d'entrée 4, et la suppression progressive du glissement relatif entre la turbine 3 et le carter de convertisseur 1 jusqu'au «pontage» complet du convertisseur.

Selon une caractéristique particulière de l'invention, représentée sur la demi-partie supérieure de la fig. 2, les ressorts 34 du dispositif amortisseur de torsion assurent, par leur action, un passage en douceur d'un rapport à l'autre.

Le fonctionnement d'un tel dispositif est le suivant: le fluide sous pression admis dans la capacité 38a repousse le moyeu piston 32 qui agit sur les éléments de friction de l'embrayage 23a, lesquels éléments de friction prennent appui sur le plateau 37a. Durant cette première étape du fonctionnement est assurée la liaison en rotation de la turbine 3 et de l'arbre tubulaire 31a du porte-satellites 16 par l'intermédiaire des cannelures 47.

Durant la seconde étape du fonctionnement, le plateau 37a entraîne axialement le plateau annulaire 29 qui assure le serrage des éléments de friction de l'embrayage 36 contre le carter de convertisseur 1, assurant ainsi le «pontage» dudit convertisseur 1. La libération des embrayages 23a et 36 est obtenue en diminuant la pression dans la capacité 38a et en accroissant la pression dans la capacité 33 entre le carter et le plateau 37a et dans la capacité 39 par les orifices 40.

Sur la fig. 2, la demi-partie inférieure de la figure (références portant l'indice b) correspond à une réalisation comportant, selon l'invention, un dispositif amortisseur de torsion interposé dans la chaîne cinématique entre l'embrayage 36 et le carter de convertisseur 1. Dans cette réalisation, le porte-satellites 16 est prolongé par un arbre tubulaire 31b lié en rotation à la cloche d'embrayage 41 par des cannelures. A l'intérieur de ladite cloche d'embrayage coulisse un piston 42 rappelé en position de repos par un ressort diaphragme 43.

La capacité de travail 38b reçoit, par un conduit 49b ménagé dans le tourillon de convertisseur 48b, le fluide sous pression destiné à la commande de l'embrayage 23b, dont les éléments de friction prennent appui sur le plateau 37b solidaire du plateau annulaire 29 de la turbine 3 du convertisseur. Ledit plateau annulaire 29 est l'élément d'appui mobile de l'embrayage 36 dont les éléments de friction prennent appui sur un anneau 44 lié élastiquement en rotation au carter de convertisseur 1 par des ressorts 45 disposés de façon connue pour réaliser un amortisseur de torsion.

Le fonctionnement d'un tel dispositif est le même que celui du dispositif représenté dans la demi-partie supérieure de la fig. 2 et décrit ci-dessus, sauf en ce qui concerne le retour en position débrayée de l'embrayage 23 et sauf pour le fonctionnement du dispositif amortisseur de torsion.

En effet, la libération de l'embrayage 23b, lorsque la pression chute dans la capacité 38b, est obtenue par l'action du ressort diaphragme 43. Le fonctionnement du dispositif amortisseur de torsion utilisant des ressorts 45 interposés dans la chaîne cinématique entre le carter de convertisseur 1 lié à l'arbre moteur 2 et l'anneau 44 permet d'assurer pendant la phase de «pontage» du convertisseur et durant l'utilisation avec convertisseur «ponté» une liaison élastique entre l'arbre moteur et le mécanisme de transmission.

Le rôle d'une transmission à rapports multiples, surtout dans le cas de la propulsion d'un véhicule, est d'obtenir un étagement correct de ces différents rapports. Pour illustrer les possibilités d'une transmission selon l'invention, on donne ci-dessous un exemple de réalisation.

Les nombres de dents des pignons, soit
36 dents pour le petit planétaire 6
42 dents pour le grand planétaire 9
90 dents pour la couronne 20

ont été choisis en tenant compte des conditions d'engrènement pour un montage à trois satellites longs 14 de 24 dents et des rapports de vitesses à obtenir. Les calculs, conduits en utilisant les formules connues pour ce type d'engrenages à trains épicycloïdaux, donnent les valeurs suivantes pour les rapports de vitesses, lesdits rapports de vitesses étant le quotient de la vitesse de sortie sur la vitesse d'entrée dans le mécanisme

1er rapport 0,40
2e rapport 0,68
3e rapport 1,00
4e rapport 1,47
Marche arrière 0,47

La réalisation particulière à l'invention du dispositif de pontage du convertisseur 1 fait qu'il est possible, notamment dans le cas d'une transmission automobile, d'utiliser ledit pontage sur les rapports de 3e et de 4e, ou sur le rapport de 4e seul, comme il est indiqué sur les tableaux 4 et 5.

Il en résulte que si l'on recherche les performances maxi sur route libre, la vitesse maxima pourra être obtenue sur le rapport de 3e avec pontage.

Sur une route à profil varié, ou pour s'adapter au rythme de la circulation, l'utilisation du 3e rapport avec convertisseur rendra la conduite plus agréable. Par contre, pour une utilisation à vitesse de croisière modérée, l'utilisation du 4e rapport avec pontage permettra d'obtenir la plus faible consommation, le moteur étant utilisé à un régime favorable.

A titre d'exemple avec un véhicule dont la vitesse maximale est de 168 km/h pour un régime moteur de 6000 t/mn et dont la vitesse correspondante à 1000 tr/mn est de 28 km/h pour le 3e rapport, l'adjonction d'un 4e rapport dont la vitesse correspondante, selon l'exemple ci-dessus, serait de 28 × 1,47 = 41 km/h environ, permettrait d'obtenir une vitesse de croisière de 130 km/h pour un régime de rotation moteur de $\dfrac{130 \times 1000}{41}$ = 3170 tr/mn environ. Cette faible vitesse de rotation moteur diminue sensiblement l'usure des organes et surtout la consommation.

Par ailleurs, la suppression du glissement interne du convertisseur par le «pontage» agit dans le même sens favorable d'une utilisation économique du véhicule.

**Revendications**

1. Changement de vitesses à train épicycloïdal à arbres menant (4, 27) et mené (21) concentriques associé à un convertisseur de couple (1) reliant un arbre moteur (2) audit arbre menant (4, 27), le train épicycloïdal étant du type à trois rapports de marche avant et un rapport de marche arrière et comportant deux planétaires centraux (9, 6), une couronne dentée (20) et un porte-satellites (16), ce dernier portant deux jeux de satellites (14, 15) où chaque satellite (15) du premier jeu engrène avec le satellite (14) correspondant du deuxième jeu, les satellites (15) du premier jeu engrenant avec le premier planétaire (6) et les satellites (14) du deuxième jeu engrenant simultanément avec le deuxième planétaire (9) et avec une couronne (20) dentée intérieurement, un premier (12) et un deuxième (18) dispositifs d'immobilisation, un premier (7) et un deuxième (10) embrayages et une roue libre (22), ce changement de vitesses comportant en outre un troisième embrayage (23) susceptible de transmettre au porte-satellites (16) une partie dérivée de la puissance du moteur, de façon à obtenir un quatrième rapport de marche avant, changement de vitesses caractérisé par le fait que ledit troisième embrayage (23) est monté entre le porte-satellites (16) et l'arbre menant (27) sortant du convertisseur (1), de manière que ladite partie dérivée de puissance du moteur transite par le convertisseur de couple (1).

2. Changement de vitesses selon la revendication 1, dans lequel ledit troisième embrayage (23) est actionné par un dispositif de commande (24) exerçant une poussée axiale, caractérisé par le fait qu'il est agencé de manière que cette poussée axiale se transmette, par l'intermédiaire de l'arbre menant (4) sortant du convertisseur ou d'une pièce (27) qui lui est solidaire en rotation, à un quatrième embrayage (29, 30) monté entre cet arbre menant (4) ou ladite pièce (27) et l'arbre d'entrée du convertisseur ou arbre moteur (2) dans le sens qui actionne cet embrayage pour réaliser le pontage dudit convertisseur (1) sur ledit quatrième rapport.

3. Changement de vitesses selon la revendication 2, dans lequel le troisième rapport est obtenu par la solidarisation entre eux de tous les organes du train planétaire, caractérisé par le fait que cette solidarisation est obtenue par action simultanée sur le premier embrayage (7) entre l'arbre menant (4) et le second planétaire (6), et sélectivement sur le deuxième embrayage (10) entre l'arbre menant (4) et le premier planétaire (9), donc sans pontage du convertisseur, ou sur ledit troisième embrayage (23), donc avec pontage du convertisseur sur le troisième rapport.

4. Changement de vitesses suivant une des revendications 1 et 3, caractérisé par le fait que le troisième embrayage (23a; 23b) et sa liaison (31a; 31b) avec le quatrième embrayage (36) de pontage du convertisseur (1) sont logés à l'intérieur du carter du convertisseur pour former un ensemble compact (fig. 2).

5. Changement de vitesses suivant une des revendications 1 à 4, caractérisé par le fait qu'au moins un dispositif amortisseur de torsion (34; 45) est interposé dans la chaîne cinématique comprenant l'arbre moteur (2) à l'entrée du convertisseur, le quatrième embrayage (29, 30), l'arbre mené (21), le troisième embrayage (23) et le porte-satellites (16), de manière à intervenir pendant la séquence de passage des rapports de troisième à quatrième et de pontage du convertisseur et/ou après pontage dudit convertisseur.

**Claims**

1. An epicyclic gearbox with concentric input (4, 27) and output (21) shafts combined with a torque converter (1) connecting an engine shaft (2) to the said input shaft (4, 27), the epicyclic gear train being of the type having three forward and one reverse drive ratio and comprising two central sun wheels (9, 6), an annulus gear (20) and a planet carrier (16), with the latter carrying two sets of planets (14, 15) in which each planet (15) of the first set engages with the corresponding planet (14) of the second set, the planets (15) of the first set meshing with the first sun wheel (6) and the planets (14) of the second set meshing simultaneously with the second sun wheel (9) and with an annulus (20) with gear teeth on the inside, a first (12) and a second (18) locking device, a first (7) and a second (10) clutch and a free wheel (22), with this gearbox also comprising a third clutch (23) able to transmit to the planet carrier (16) a part of the power tapped off from the engine power so as to provide a fourth forward drive ratio, which gearbox is characterized in that the said third clutch (23) is mounted between the planet carrier (16) and the input shaft (27) from the converter (1) in such a way that the tapped off part of the engine power passes through the torque converter (1).

2. The gearbox according to claim 1, in which the said third clutch (23) is operated by a control device (24) applying an axial thrust, characterized in that it is so designed that this axial thrust is transmitted via the input shaft (4) from the converter, or via a component (27) which is fixed to it in rotation, to a fourth clutch (29, 30) mounted between this input shaft (4) or the said component (27) and the converter drive shaft or engine shaft (2) in such a direction as to operate this clutch and produce lock-up of the said torque converter (1) in the said fourth ratio.

3. The gearbox according to claim 2, in which the third ratio is obtained by locking together all the components of the epicyclic gear train, characterized in that this locking action is achieved by simultaneous action on the first clutch (7) between the input shaft (4) and the second sun wheel (6), and selectively on the second clutch (10) between the input shaft (4) and the first sun wheel (9), i.e. without torque converter lock-up, or on the said third clutch (23), i.e. with torque converter lock-up in the fourth ratio.

4. The gearbox according to any of claims 1 to 3, characterized in that the third clutch (23a; 23b) and its link (31a; 31b) with the fourth clutch (36) locking up the converter (1) are housed inside the torque converter casing to form a compact unit (fig. 2).

5. The gearbox according to any of claims 1 to 4, characterized in that at least one torsion shock absorber device (34; 45) is inserted in the kinematic train consisting of the torque converter input shaft (2) from the engine, the fourth clutch (29, 30), the output shaft (21), the third clutch (23) and the planet carrier (16) in such a way as to intervene during the sequence of changing up from the third ratio to the fourth ratio and of locking up the converter and/or after locking up of the said converter.

**Patentansprüche**

1. Schaltgetriebe mit einem Epizykloid-Umlaufgetriebezug mit konzentrischer Antriebswelle (4, 27) und Abtriebswelle (21), zusammen mit einem Drehmomentwandler (1), der eine Motorwelle (2) mit der genannten Antriebswelle (4, 27) verbindet, wobei das Epizykloid-Umlaufgetriebe vom Typ mit drei Vorwärtsgängen und einem Rückwärtsgang ist und zwei zentrale Planetenräder (9, 6), einen Zahnkranz (20) und einen Satellitenträger (16) enthält, wobei dieser letztere zwei Satellitensätze (14, 15) trägt, bei denen jedes Satellitenrad (15) des ersten Satzes mit dem entsprechenden Satellitenrad (14) des zweiten Satzes im Eingriff ist, die Satellitenräder (15) des ersten Satzes mit dem ersten Planetenrad (6) im Eingriff sind und die Satellitenräder (14) des zweiten Satzes gleichzeitig mit dem zweiten Planetenrad (9) und von innen mit einem Zahnkranz (20), einer ersten (12) und einer zweiten (18) Sperrvorrichtung, einer ersten (7) und einer zweiten (10) Kupplung und einem Freilauf (22) im Eingriff sind, wobei dieses Schaltgetriebe ferner eine dritte (23) Kupplung enthält, die geeignet ist, einen abgeleiteten Teil der Motorleistung auf den Satellitenträger (16) zu übertragen, so dass man einen vierten Vorwärtsgang erhält, wobei das Schaltgetriebe dadurch gekennzeichnet ist, dass diese dritte Kupplung (23) zwischen dem Satellitenträger (16) und der Antriebswelle (27) montiert ist, die aus dem Drehmomentwandler (1) herausragt, so dass der genannte abgeleitete Teil der Motorleistung durch den Drehmomentwandler (1) geht.

2. Schaltgetriebe gemäss Anspruch 1, in dem die genannte dritte Kupplung (23) durch eine Steuervorrichtung (24) betätigt wird, die einen Axialschub ausübt, dadurch gekennzeichnet, dass sie so angeordnet ist, dass sich dieser Axialschub über die Antriebswelle (4), die aus dem Drehmomentwandler ragt, oder über ein Teil (27), das drehfest mit ihr verbunden ist, auf eine vierte Kupplung (29, 30) überträgt, die zwischen dieser Antriebswelle (4) bzw. dem genannten Teil (27) und der Eingangswelle des Drehmomentwandlers oder der Motorwelle (2) montiert ist, in dem Sinn, dass sie die genannte Kupplung betätigt um die Überbrückung des genannten Drehmomentwandlers (1) auf den genannten vierten Gang herzustellen.

3. Schaltgetriebe gemäss Anspruch 2, bei dem der dritte Gang durch die feste Verbindung aller Organe des Planetenzugs untereinander hergestellt wird, dadurch gekennzeichnet, dass diese feste Verbindung durch die gleichzeitige Einwirkung auf die erste Kupplung (7) zwischen der Antriebswelle (4) und dem zweiten Planetenrad (6), und wahlweise auf die zweite Kupplung (10) zwischen der Antriebswelle (4) und dem ersten Planetenrad (9), d.h. also ohne Überbrückung des Drehmomentwandlers, oder auf die dritte Kupplung (23), d.h. also mit Überbrückung des Drehmomentwandlers auf den dritten Gang erreicht wird.

4. Schaltgetriebe gemäss einem der Ansprüche 1 und 3, dadurch gekennzeichnet, dass die dritte Kupplung (23a; 23b) und ihre Verbindung (31a; 31b) mit der vierten, der Überbrückungskupplung (36) des Drehmomentwandlers (1) innerhalb des Gehäuses des Drehmomentwandlers angeordnet sind um eine kompakte Baugruppe zu bilden (Abb. 2).

5. Schaltgetriebe gemäss einem der Ansprüche 1 bis 4, dadurch gekennzeichnet, dass mindestens eine Drehschwingungsdämpfervorrichtung (34; 45) in die kinematische Kette bestehend aus der Motorwelle (2) am Eingang des Drehmomentwandlers, der vierten Kupplung (29, 30), der Abtriebswelle (21), der dritten Kupplung (23) und dem Satellitenträger (16) gelegt ist, so dass sie während der Schaltfolge vom dritten in den vierten Gang und der Überbrückung des Drehmomentwandlers und/oder nach der Überbrückung des genannten Drehmomentwandlers wirksam wird.

FIG.1

# FIG.2

**FIG.3**

|  | 7 | 10 | 18 | 12 | 22 |
|---|---|---|---|---|---|
| 1 | X |  |  |  | X |
| 2 | X |  |  | X |  |
| 3 | X | X |  |  |  |
| AR |  | X | X |  |  |

**FIG.4**

|  | 7 | 10 | 23 | 18 | 12 | 22 |
|---|---|---|---|---|---|---|
| 1 | X |  |  |  |  | X |
| 2 | X |  |  |  | X |  |
| 3 | X | X |  |  |  |  |
| 4 |  |  | X |  | X |  |
| AR |  | X |  | X |  |  |

**FIG.5**

|  | 7 | 10 | 23 | 18 | 12 | 22 |
|---|---|---|---|---|---|---|
| 1 | X |  |  |  |  | X |
| 2 | X |  |  |  | X |  |
| 3 | X |  | X |  |  |  |
| 4 |  |  | X |  | X |  |
| AR |  | X |  | X |  |  |